# EUROPÄISCHE PATENTSCHRIFT

(11) **EP 2 173 510 B1**
(45) Veröffentlichungstag und Bekanntmachung des Hinweises auf die Patenterteilung: **11.03.2015**
(21) Anmeldenummer: 08774615.2
(22) Anmeldetag: 02.07.2008
(51) Int. Cl.: B23C 3/30, B23C 5/08

(54) **VERFAHREN ZUM FRÄSEN VON KUGELBAHNEN UND SCHEIBENFRÄSER FÜR KUGELBAHNEN**
METHOD FOR MILLING BALL RACES AND SIDE MILLING CUTTER FOR BALL RACES
PROCÉDÉ DE FRAISAGE DE PISTES À BILLES ET FRAISEUSE À DISQUE POUR PISTES À BILLES

(30) Priorität: 06.07.2007 DE 102007031695
(43) Veröffentlichungstag der Anmeldung: 14.04.2010
(73) Patentinhaber: Sandvik Intellectual Property AB, 811 81 Sandviken (SE)
(72) Erfinder: SCHERBARTH, Stefan, 74321 Bietigheim-Bissingen (DE)
(74) Vertreter: WSL Patentanwälte Partnerschaft mbB
(86) Internationale Anmeldenummer: PCT/EP2008/058474
(87) Internationale Veröffentlichungsnummer: WO 2009/007280

(56) Entgegenhaltungen:
- WO-A-03/053617
- WO-A-2006/058555
- WO-A-2006/058556
- DE-U1- 9 316 953

## Beschreibung

Die vorliegende Erfindung betrifft ein Verfahren zum Fräsen von Kugelbahnen mit einem in etwa elliptischen Profil, das eine erste Halbachse a hat, die sich in Richtung der Normalen zum Grund der Kugelbahn erstreckt, und eine zweite Halbachse b hat, die senkrecht zur ersten Halbachse a und senkrecht zur Längsrichtung der Kugelbahn verläuft, wobei zur Herstellung der Kugelbahn ein Scheibenfräser verwendet wird, dessen Umfangsschneiden das elliptische Profil der Kugelbahn schneiden bzw. bilden, wobei die Schneiden des Scheibenfräsers in einem die Achse des Fräsers enthaltenden Schnitt ihrerseits ein elliptisches Profil haben, mit dessen Hilfe das elliptische Profil der Kugelbahn hergestellt wird.

Derartige Kugelbahnfräser in Form von Scheibenfräsern sind seit langem bekannt, und ebenso sind auch die entsprechenden Verfahren bekannt, durch den rotierenden Scheibenfräser das Kugelbahnprofil herzustellen, indem der Scheibenfräser zu einem entsprechenden Werkstück derart ausgerichtet wird, dass die Längsrichtung der Kugelbahn in die Rotationsebene des Scheibenfräsers fällt bzw. parallel zu dieser und senkrecht zur Achse des Scheibenfräsers verläuft und der Scheibenfräser mit dem entsprechenden Werkstück (z. B. einer Kugelbahnnabe) in Eingriff gebracht wird, wobei der Vorschub des Fräsers relativ zum Werkstück senkrecht zur Fräserachse erfolgt. Das Kugelbahnprofil entspricht dann genau dem Profil der Schneiden des Scheibenfräsers in einem die Achse des Fräsers enthaltenden Schnitt. Daneben sind auch andere Arten von Kugelbahnfräsem zum Beispiel in Form von Schaftfräsern oder Formfräsern bekannt bei denen ebenfalls das Profil der Kugelbahn einem die Achse des Fräsers enthaltenden Schnitt bzw. einer seitlichen Draufsicht auf den Fräser entspricht.

Ein Kugelbahnfräser der vorstehend genannten Art und implizit auch ein entsprechendes Verfahren zum Fräsen von Kugelbahnen ist aus der WO 03/053617 A1 bekannt, ohne dass jedoch in dieser Druckschrift näher auf das Achsenverhältnis des elliptischen Profils der Kugelbahnen und der Fräserschneiden eingegangen wird. Es darf jedoch unterstellt werden, dass, wie allgemein bei Kugelbahnen üblich, das Verhältnis b/a der oben definierten Halbachsen kleiner als 1 ist, wie allgemein bei Kugelbahnen zur Erzielung eines stabilen Laufs der Kugel üblich.

Demzufolge haben notwendigerweise auch die Fräserschneiden, deren Profil exakt dem Profil der damit erzeugten Kugelbahn entspricht, ein entsprechendes Halbachsenverhältnis b/a, weiches kleiner als 1 ist

Schließlich ist auch noch ein auf den Erfinder der vorliegenden Anmeldung zurückgehender Kugelbahnfräser bekannt, der als Schaftfräser ausgebildet ist, dessen Vorschubbewegung jedoch teilweise in axialer Richtung erfolgt, so dass der Fräser teilweise wie ein Bohrer arbeitet Bei diesem Fräser ergibt sich das Profil der Kugelbahn durch einen Schnitt durch die Einhüllende der Schneidkanten mit einer zur Fräserachse um einen Winkel zwischen mehr als 0° und weniger als 90° zur Fräserachse geneigten Schnittebene, wohingegen das Profil des Fräsers in der Seitenansicht deutlich vom Profil der zu erzeugenden Kugelbahn abweicht. Moderne Gelenkwellen von Kraftfahrzeugen weisen häufig so genannte VL-Gelenke auf. Diese VL-Gelenke weisen eine Nabe und einen die Nabe im Abstand umfassenden Ring auf, die mit Hilfe von Kugeln ein Gelenk bilden, indem die Kugeln in Kugelbahnen angeordnet werden, welche auf der Außenfläche der Nabe und auf der Innenfläche des entsprechenden, die Nabe umfassenden Ringes ausgebildet sind. Nabe und Ring werden deshalb auch als "Kugelnabe" bzw. "Kugelring" bezeichnet. Dabei verlaufen diese Kugelbahnen in der Außenwand der Kugelnabe ebenso wie in der Innenwand des Kugelringes unter einem Anstellwinkel relativ zur Achse der Kugelnabe bzw. des Kugelringes, der zum Beispiel bei etwa 15° liegt und im allgemeinen 5° nicht unterschreitet und 40° nicht überschreitet, obwohl auch größere oder kleinere Winkel prinzipiell realisiert werden können. Dabei verlaufen benachbarte Kugelbahnen jeweils abwechselnd in entgegen gesetzter Richtung geneigt zur Naben- bzw. Ringachse. Die in Kugelring und Kugelnabe jeweils paarweise in radialer Richtung übereinander liegend angeordneten Kugelbahnen sind ebenfalls in entgegengesetzter Richtung angestellt (zur Achse von Nabe und Ring geneigt), so dass die Kugelbahnen von Kugelnabe und Kugelring sich wechselseitig kreuzen, und zwar unter einem Winkel, der (unter Berücksichtigung unterschiedlicher Vorzeichen bei entgegen gesetzter Neigung) der Differenz der Anstellwinkel der Kugelbahnen von Kugelnabe und Kugelring entspricht, wobei die Kugeln jeweils in dem auf diese Weise gebildeten Kreuzungspunkt der paarweise einander gegenüber liegenden Kugelbahnen angeordnet sind. Wobei der minimale Abstand zwischen dem Profil des Scheibenfräsers (genauer einer durch die rotierenden Schneidkanten gebildeten Hüllfläche um die Fräserachse) und der Achse der Kugelnabe konstant gehalten wird. Alternativ kann die Kugelnabe um Ihre Achse gedreht und dabei mit Ihrer Achse um den Anstellwinkel zur Rotationsebene des Fräsers geneigt Senkrecht zur Fräserächse bewegt werden. In jedem Fall ist dies ein relativ komplexer Bewegungsablauf der Relativbewegung zwischen Fräser und Kugelnabe.

Werden in eine entsprechende VL-Kugelnabe mit einem herkömmlichen, scheibenförmigen Profilfräser und dem herkömmlichen Verfahren Kugelbahnen eingebracht wie dies oben erläutert wurde, so wird weiterhin entsprechend der wechselnden Neigung der Kugelbahnen die Achse der Kugelnabe relativ zur Rotationsebene des Schreibenfräsers verkippt und es erfolgt dann eine Relativbewegung zwischen der Außenfläche der Kugelnabe und der Achse des Scheibenfräsers senkrecht zu dieser Achse und unter dem neuen Anstellwinkel geneigt zur Nabenachse. Anschaulich gesprochen verläuft dann der Grund (die zentrale Grundlinie) der Kugelbahn in etwa entlang einer Schraubenlinie auf einer gedachten Zylinderoberfläche um die Nabenachse.

Da benachbarte Kugelbahnen einer solchen VL-Kugelnabe relativ zur Achse der Kugelnabe abwechselnd in entgegengesetzter Richtung angestellt sind, d. h. abwechselnd einen positiven und einen negativen Anstellwinkel aufweisen, muss die Achse der Kugelnabe jeweils abwechselnd in unterschiedlicher Richtung zu der Rotationsebene des Scheibenfräsers geneigt werden oder es werden in einer ersten Einspannung erst die Kugelbahnen mit demselben Anstellwinkel and anschließend die mit dem Anstellwinkel entgegen gesetzten Vorzeichens hergestellt, wobei die Anstellwinkel entgegen gesetzten Vorzeichens nicht zwingend denselben Betrag haben müssen.

Die Herstellung derartiger VL-Naben erfordert daher relativ komplexe mehrachsige Werkzeugmaschinen, die entsprechend komplizierte Einstell- und Vorschubbewegungen erlauben.

Darüber hinaus ist es mit dem herkömmlichen Verfahren und den herkömmlichen Fräsern grundsätzlich nur möglich, ein Kugelbahnprofil zu erzeugen, das genau dem Profil der Schneiden des Kugelbahnfräsers, genauer gesagt dem die Fräserachse enthaltenden Schnitt durch eine durch die Schneiden erzeugte Einhüllende des Kugelbahnfräsers, d. h. dem "Fräserprofil" entspricht.

Gegenüber diesem Stand der Technik liegt der vorliegenden Erfindung die Aufgabe zugrunde, ein Verfahren zum Fräsen von Kugelbahnen und einen entsprechenden Scheibenfräser zu schaffen, die zum einen auch die Herstellung von Kugelbahnen in Kugelnaben von VL-Gelenken auf relativ einfacheren Bearbeitungszentren ermöglichen, wobei zum anderen auch noch die Möglichkeit bestehen soll, mit ein und demselben Fräser das Profil der hergestellten Kugelbahnen zu variieren.

Insbesondere soll die vorliegende Erfindung ermöglichen, dass die Kugelnaben von VL-Gelenken auf den weit verbreiteten dreiachsigen Bearbeitungszentren mit C-Achse erfolgen kann. Dies würde eine beträchtliche Reduzierung der Fertigungskosten ermöglichen.

Hinsichtlich des Eingangs definierten Verfahrens wird diese Aufgabe dadurch gelöst, dass ein Scheibenfräser mit einem elliptischen Scheibenprofil verwendet wird, bei welchem das Verhältnis der zweiten Halbachse zur ersten Halbachse größer ist als das Verhältnis der zweiten Halbachse zur ersten Halbachse beim Profil der herzustellenden Kugelbahn, wobei die Achse des Scheibenfräsers gegenüber der zweiten Halbachse des Abschnitts des Kugelbahnprofils, mit welchem der Scheibenfräser gerade in Eingriff steht, um einen von 0° verschiedenen Anstellwinkel geneigt ist.

Anders ausgedrückt ist die Fräserachse gegenüber der Grundlinie der durch den Fräser erzeugten bzw. zu erzeugenden Kugelbahn um einen von 90° abweichenden Winkel geneigt Äquivalent hierzu wäre eine Definition der Ausrichtung, wonach bei der Relativbewegung zwischen Fräser und Kugelnabe die Achse der Kugelnabe relativ zu der Rotationsebene des Scheibenfräsers (d. h. der zur Achse des Fräsers senkrechten Ebene) um den gewünschten Anstellwinkel geneigt ist

Es versteht sich, dass dementsprechend beim Herstellen der entsprechenden Kugelbahn der Vorschubbewegung des Scheibenfräsers relativ zum Werkstück quer zur Fräserachse auch eine Vorschubbewegung relativ zum Werkstück in Längsrichtung der Fräserachse überlagert ist, wobei das Verhältnis dieser Vorschubbewegungen den erwähnten Anstellwinkel definiert Genauer gesagt ist der Tangens des Anstellwinkels gegeben durch das Verhältnis der Vorschubgeschwindigkeit in Längsrichtung der Fräserachse zur Vorschubgeschwindigkeit senkrecht zur Fräserachse. Die Vorschubgeschwindigkeit senkrecht zur Fräserachse wird dabei durch Rotation der Kugelnabe um ihre Achse erzeugt

Bevorzugt ist dabei eine Ausführungsform der Erfindung, bei welcher der Anstellwinkel zwischen 5° und 40°, vorzugsweise bis 35° eingestellt wird und die Vorschubgeschwindigkeiten entsprechend aufeinander abgestimmt werden. Besonders bevorzugt liegt der Anstellwinkel zwischen 10° und 30° oder noch besser zwischen 10° und 20°.

Im Ergebnis wird durch diesen Anstellwinkel der Achse des Fräsers zur großen Halbachse des Kugelbahnprofils, der gleichzeitig auch dem Anstellwinkel zwischen der Rotationsebene der Fräserscheibe zur Längsrichtung der Kugelbahn entspricht, ein Kugelbahnprofil erzeugt bei dem das Verhältnis der zweiten Halbachse zur ersten Halbachse kleiner ist als bei dem elliptischen Profil des Scheibenfräsers (gesehen in einer die Fräserachse enthaltenden Ebene), was anschaulich klar ist, da das elliptische Profil des Scheibenfräsers relativ zu dem elliptischen Profil der Kugelnabe um den erwähnten Anstellwinkel verkippt ist Dies führt bei einer Projektion des Fräserprofils in die Ebene des Profils der Kugelbahn zu einer effektiven Verkürzung der zweiten Halbachsen, während die ersten Halbachsen unverändert bleiben. Hinzu kommt jedoch noch ein weiterer Aspekt, der das genaue Kugelbahnprofil beeinflusst, nämlich der (maximale) Radius des Scheibenfräsers.

Dabei kann sich Halbachsenverhältnis insbesondere auch umkehren, d. h. während das Halbachsenverhältnis b'/a' des Fräserproflls größer als 1 ist, kann das entsprechende Halbachsenverhältnis b/a des Kugelbehnprofils kleiner als 1 sein und ist in der Praxis zumeist in der Größenordnung von 0,95 bis 0,995. Das heißt, dass bei der Kugelbahn die Rollen von kleiner und großer Halbachse, bezogen auf die Ausrichtung dieser Achsen beim Fräser, genau genommen vertauscht sind. Die Halbachsen der Kugelbahn werden dabei so gewählt, dass die Bahn zwar nur geringfügig von einem Kreisquerschnitt abweicht, wobei jedoch sichergestellt wird, dass der Krümmungsradius am Grunde der Kugelbahn etwas kleiner ist als der Kugelradius, und in Richtung der ersten Halbachse zunimmt und dort den Kugelradius übersteigt, so daß die betreffende Kugel genau genommen auf zwei parallelen Linien beiderseits der Grundlinie der Kugelbahn und im Abstand zu dieser abrollt. Dies garantiert eine bessere Stabilität der Laufbahn der Kugel auch nach einem gewissen Verschleiß.

Das oben in Bezug auf den Stand der Technik definierte Profil der Schneiden des Fräsers wird im Rahmen der vorliegenden Anmeldung als das "Fräserprofil" oder "Profil des Scheibenfräsers" bezeichnet, welches wegen des Anstellwinkels des Fräsers relativ zur Längsrichtung der Kugelbahn gemäß der vorliegenden Erfindung jedoch von dem Profil der Kugelbahn zu unterscheiden Ist.

Es versteht sich, dass das Profil dabei nicht den Umfang einer halben Ellipse haben muss, sondern dass ein kleinerer Abschnitt des Profils ausreicht. Das Kugelbahnprofil wird vorzugsweise so ausgelegt, dass im streng geometrischen Sinn die Kugel zwei Berührungspunkte mit diesem Profil bzw. zwei parallele Berührungslinien symmetrische zur Grundlinie der Kugelbahn aufweist. In der Praxis können die Krümmungsradien der Kugeln und des Profils der Kugelbahn in der Nähe der Berührungslinien sehr nahe beieinander liegen, so dass sich eine entsprechend verbreiterte Auflagelinie ergibt, die zu einem geringeren Verschleiß des Gelenks beiträgt

Bei einer Variante der vorliegenden Erfindung sind sowohl die erste als auch die zweite Halbachse des Kugelbahnprofils nur geringfügig (um weniger als 10%) größer als der Radius der dafür vorgesehenen Kugeln, während der Krümmungsradius am Grund des Kugelbahnprofils etwas kleiner ist als der Radius dieser Kugeln.

Hinsichtlich des Kugelbahnfräsers selbst wird die der Erfindung zugrunde liegende Aufgabe dadurch gelöst dass das Verhältnis der zweiten Halbachse zur ersten Halbachse des Profils des Scheibenfräsers zwischen 1,06 und 3,5, insbesondere zwischen 1,1 und 2,5 liegt. Im Ergebnis sollte dann das Halbachsenverhältnis (b'/a') der Fräserschneiden um 10 % bis 300 % größer sein als das Halbachsenverhältnis (b/a) der Kugelbahn. Dies Ist typischerweise deutlich größer als das übliche Verhältnis von zweiter Halbachse zu erster Halbachse bei dem Profil herkömmlicher Kugelbahnen und insbesondere deutlich größer als das Halbachsenverhältnis der Kugelbahn, wenn bei dieser die vorstehende Bedingung eingehalten wird, dass beide Halbachsen des elliptischen Kugelbahnprofils um weniger als 10% größer sind als der Kugelradius. Besonders bevorzugt kann das Verhältnis der Halbachsen des Fräserprofils zwischen 1,15 und 1,7 liegen.

Des Weiteren sollte für das erfindungsgemäße Verfahren ein Scheibenfräser verwendet werden, dessen Radius das 2- bis 12fache der großen Halbachse des Fräserprofils beträgt. Als "Radius" des Scheibenfräsers ist dabei der maximale Radius definiert, gemessen von der Achse des Fräsers zu dem am weitesten von der Achse entfernt liegenden Punkt der elliptischen Fräserschneiden.

Wie bereits erwähnt, wird bei dem erfindungsgemäßen Verfahren in der Praxis das Kugelbahnprofil nicht nur durch den Anstellwinkel, sondern aufgrund dieses Anstellwinkels auch durch den Radius des Scheibenfräsers definiert, so dass aus diesem Grund der Durchmesser des Scheibenfräsers im Verhältnis zur zweiten Halbachse des Fräserschneidprofiles nicht allzu groß sein sollte und vorzugsweise zwischen 4 und 8 liegt.

Die Halbachsen des Fräserprofils, der Radius der Kugel (entsprechend in etwa den Halbachsen der Kugelbahn), der Radius des Fräsers und der Anstellwinkel unterliegen einer komplexen wechselseitigen Beziehung. Grundsätzlich kann man sagen, dass bei gegebenem Fräserradius und gegebenem Kugeldurchmesser mit zunehmendem Anstellwinkel das Verhältnis b'/ a' der Halbachsen des Fräserprofils deutlich zunimmt und auch umso größer wird, je größer das Verhältnis von Fräserradius zu Kugelradius wird. Bei gegebenem Kugelradius und gegebenem Anstellwinkel wird hingegen der Absolutwert der zweiten Halbachse b' kleiner, wobei aber die erste Halbachse a' relativ noch stärker abnimmt.

Insbesondere die Herstellung von VL-Kugelnaben kann mit dem erfindungsgemäßen Verfahren derart erfolgen, dass die Kugelnabe mit ihrer Achse senkrecht zur Achse des Scheibenfräsers ausgerichtet wird. Während der Vorschubbewegung des Scheibenfräsers quer zu seiner Achse, d. h. in Längsrichtung der Achse der VL-Kugelnabe, wird dieser Vorschubbewegung noch eine zweite in Längsrichtung der Fräserachse verlaufende Vorschubbewegung überlagert, indem die VL-Kugelnabe um ihre Achse gedreht wird, so dass am Umfang der Kugelnabe das gewünschte Profil durch die Vorschubbewegung relativ zur Längsachse des Scheibenfräsers und die gleichzeitige Drehung der Kugelnabe um ihre Achse erzeugt wird.

Besonders bevorzugt ist dabei eine Montage der Kugelnabe auf einer Spindel, deren Achse mit der Achse der Kugelnabe zusammenfällt, wobei der Spindelhub auf den gewünschten Anstellwinkel abgestimmt ist. Es versteht, dass in entsprechend eingerichteten Bearbeitungszentren diese spindelartige Bewegung auch simuliert bzw. bzw. nachgebildet werden kann, ohne dass tatsächlich eine Montage der Nabe auf einer Spindel erfolgen muß.

Den beiden Vorschubbewegungen könnte bei Bedarf außerdem noch eine weitere Bewegung quer zu der Fräserachse und der Nabenachse überlagert sein, so dass der kürzeste Abstand zwischen den beiden Achsen während der Vorschubbewegung entlang eines Kreisbogens variiert würde, dessen Mittelpunkt auf der Nabenachse liegt und in etwa in der Mitte zwischen den axialen Enden der Kugelbahn bzw. der Kugelbahnnabe liegt. Die Kugelbahn bzw. die Laufbahn einer Kugel in der Kugelbahn der VL-Nabe verliefe dann auf der Oberfläche einer Kugel, deren gedachter Mittelpunkt im Zentrum der Kugelnabe liegt.

Bei den derzeitig üblichen VL-Kugelgelenken liegt jedoch der Grund der Kugelbahn auf einer gedachten Zylinderoberfläche um die Achse der Kugelnabe, und verläuft dabei entlang einer Schraubenlinie. Entsprechendes gilt auch für die Kugelbahnen im Kugelring. Dies ist deshalb möglich, weil beim Verkippen den Kugelnabe relativ zum Kugelring die in den Kreuzungspunkten der einander gegenüber liegenden Kugelbahnen angeordneten Kugeln auf den in der Verkippungsebene gegenüber liegenden Seiten der Nabe während dieser Verkippung unterschiedliche axiale Positionen bezüglich der Kugelnabe einnehmen.

Die Radien der Zylinderflächen, auf welchen der Grund der Kugelbahnen der Kugelnabe bzw. des Kugelringes verlaufen, unterscheiden sich dabei um etwas mehr als den Durchmesser der in den Kugelbahnen laufenden Kugeln, da diese im allgemeinen nicht genau auf dem Grund einer Kugelbahn, sondern auf zwei parallelen, beiderseits im Abstand von der Grundlinie einer Kugelbahn und parallel zu dieser Grundlinie verlaufenden Linien abrollen.

Weitere Vorteile, Merkmale und Anwendungsmöglichkeiten der vorliegenden Erfindung werden deutlich anhand der folgenden Beschreibung, Bevorzugte Ausführungsformen und der dazugehörigen Figur. Es zeigen:
- Figur 1: eine perspektivische Ansicht einer VL-Kugelnabe mit Kugelbahnen an der äußeren Umfangsoberfläche,
- Figur 2: eine stirnseitige Ansicht auf die VL-Kugelnabe nach Figur 1,
- Figur 3: eine Abwicklung der äußeren Umfangsoberfläche einer VL-Kugelnabe mit den zur Achsrichtung geneigt verlaufenden Kugelbahnen,
- Figur 4: einen die Drehachse enthaltenden Schnitt durch einen Scheibenfräser mit elliptischem Schneidenprofil und
- Figur 5: das durch einen Fräser nach Figur 4 erzeugte Kugelbahnprofil wenn die Fräserachse aus der Papierebene heraus verkippt ist.

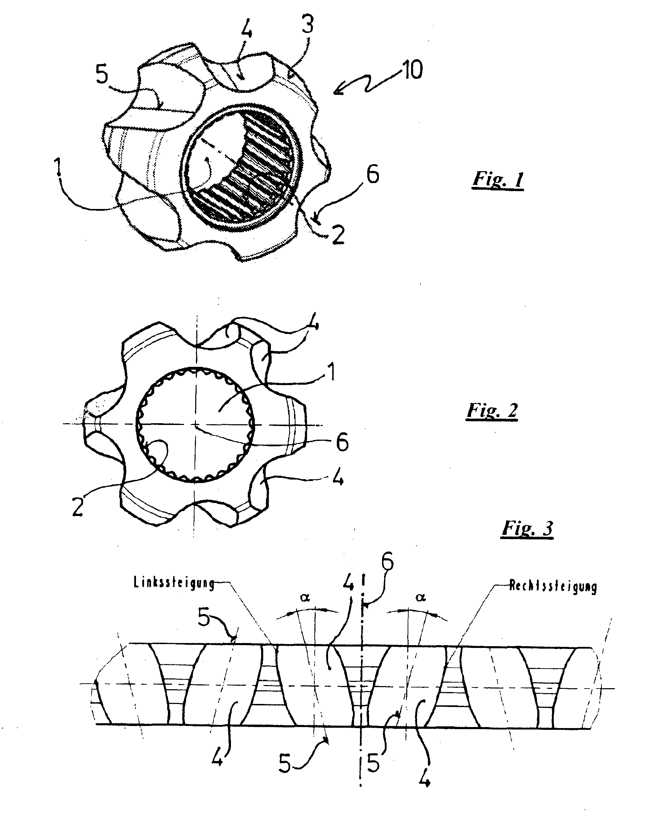

Man erkennt in Figur 1 eine insgesamt mit 10 bezeichnete VL-Kugelnabe mit einer zentralen Bohrung 1 die eine Innenverzahnung 2 aufweist und einer äußeren Umfangsoberfläche 3, in der insgesamt 6 Kugelbahnen 4 verlaufen, deren Grundlinie 5 einen konstanten Abstand zur Achse hat, jedoch zur Achsrichtung leicht geneigt verläuft, d.h. die Grundlinien 5 bilden Schraubenlinien, wobei allerdings der Grund 5 jeweils benachbarter Kugelbahnen in entgegengesetzte Richtung geneigte Schraubenlinien bildet. Die Innenverzahnung 2 der Kugelnabe 10 dient der festen Verbindung der Kugelnabe mit einer Welle, z. B. einer mit einem Motor verbundenen Antriebswelle oder einer entsprechenden Abtriebswelle, die beispielsweise mit dem Rad eines Fahrzeuges verbunden sein kann. Der die Kugelnabe umfassende Kugelring, dessen Innenfläche ebenfalls Kugelbahnen aufweist, die gegenüber der Achsrichtung in ähnlicher Weise leicht geneigt sind (allerdings jeweils entgegengesetzt zu der Neigung der unmittelbar gegenüberliegenden Kugelbahn in der Kugelnabe) ist hier nicht dargestellt. Jede der im vorliegenden Fall sechs Kugelbahnen 4 nimmt eine Kugel auf, die in dieser Kugelbahn 4 und der entsprechenden gegenüberliegenden Kugelbahn des nicht dargestellten Kugelringes läuft, so daß die Kugelnabe und der Kugelring über die in den Kugelbahnen laufenden und zwischen Nabe und Ring angeordneten Kugeln gelenkig miteinander verbunden sind und dabei Drehmoment übertragen können.

Figur 2 ist eine stirnseitige Draufsicht auf eine Kugelnabe entlang der Achse 6.

In Figur 3 ist eine Abwicklung des Außenumfangs der Kugelnabe nach den Figuren 1 und 2 dargestellt. Die Abwicklung zeigt insgesamt sechs Kugelbahnen 4, deren Grundlinie 5 jeweils abwechselnd in entgegengesetzte Richtung gegenüber der achsparallelen Richtung um einen Winkel α geneigt sind, wobei dieser Winkel α im konkreten Fall etwa 15°C beträgt. Die speziellen, vorteilhaften Eigenschaften von VL-Kugelnaben brauchen hier nicht weiter erläutert zu werden, da diese Naben an sich bekannt und nicht Gegenstand der vorliegenden Erfindung sind.

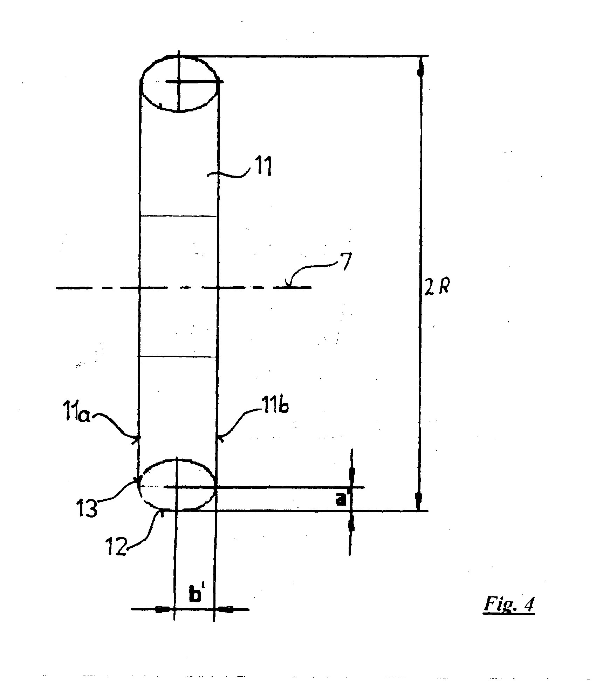

Die vorliegende Erfindung befaßt sich jedoch mit einem besonders einfachen und eleganten Verfahren zur Herstellung entsprechender Kugelbahnen für VL-Gelenke. Hierzu ist ein Scheibenfräser vorgesehen, dessen Profil in Figur 4 nur schematisch wiedergegeben ist. Es versteht sich, daß das elliptische Profil der Schneiden im wesentlichen nur die äußere Hälfte der in Figur 4 vollständig dargestellten Ellipse oder weniger umfaßt und das die jeweils radial innen liegende Hälfte der Ellipse nur zur Verdeutlichung der elliptischen Form wiedergegeben ist, tatsächlich aber nicht weitere Schneiden aufweist, da sich in diesen Bereich im allgemeinen das massive Material der Fräserscheibe 11 befindet. Die an den Stirnseiten der Fräserscheibe 11 in die Rotationsebene des Fräsers auslaufenden Schneiden des elliptischen Profils können jedoch als Nebenschneiden 13 noch ein stück weit radial oder auch mit leichter Einwärtskrümmung verlaufen, um beim Profilfräsen möglichst glatte Oberflächen zu hinterlassen. Dabei versteht es sich, dass die Nebenschneiden 13 in axialer Richtung etwas über die radial angrenzenden, stirnseitigen Flächen 11 a, 11 b der Fräserscheibe 11 hinausragen sollten, auch wenn dies in den Figuren nicht deutlich dargestellt ist. Die umfangsseitigen und annähernd achsparallel verlaufenden Hauptschneiden 12 erzeugen den Grund der Kugelbahnen 4, wobei der Übergang zwischen "Hauptschneiden" und "Nebenschneiden" bei einem derartigen Fräser mit elliptischem Profil selbstverständlich fließend ist. Der Radius des Fräsers ist mit R bezeichnet

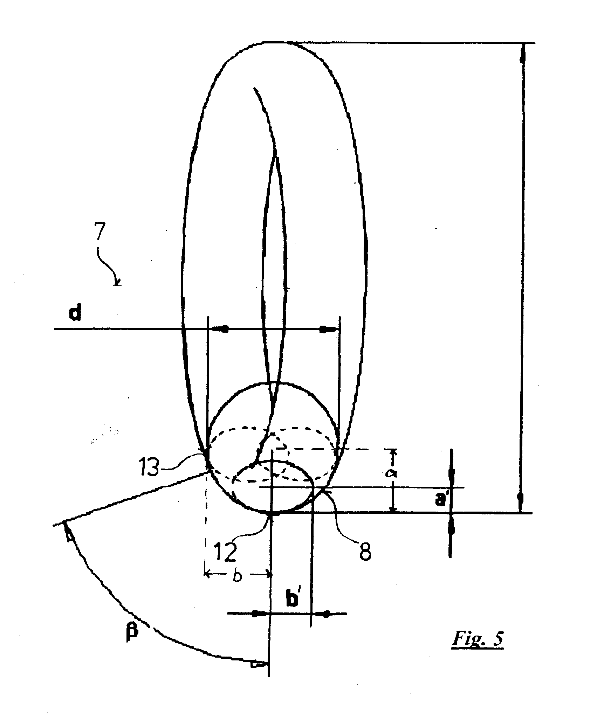

In der Darstellung gemäß Figur 4 verläuft die Achse 7 des Fräsers in der Papierebene.. In der Darstellung gemäß Figur 5 ist die Achse 7 des Fräsers aus der Papierebene herausgekippt und gleichzeitig ist das in der Papierebene liegende und durch den Fräser 20 erzeugte Profil 8 einer Kugelbahn 4 zu erkennen. Dieses Profil hat nahezu eine Kreisform und ein deutlich kleineres Verhältnis b/a der ersten zur zweiten Halbachse dieses Profils. Dabei ist zu beachten, daß die in Figur 5 zusätzlich eingezeichnete Ellipse des Schneidenprofils gegenüber der Papierebene um denselben Winkel verkippt ist wie die Achse des Scheibenfräsers, so daß diese Ellipse während des Hindurchtretens durch die Papierebene, beispielsweise in der Darstellung gemäß Figur 5 von hinten nach vorn, anschaulich gesprochen beim Erzeugen des in der Figur linken Randes des nahezu kreisförmigen Profils der Kugelbahn die gestrichelt eingezeichnete Position einnimmt, dann, wenn sie zur Hälfte durch die Papierebene hindurchgetreten ist, die durchgezogen dargestellte Position einnimmt und schließlich, wenn sie fast vollständig aus der Papierebene heraustritt, die gestrichelte Position am rechten Rand des Kugelbahnprofils einnimmt.

Dabei sind die Ellipsen zur Papierebene geneigt, so dass bei der linken, gestrichelten Ellipse nur der linke äußerste Rand (Nebenschneide 13) in der Papierebene und der Rest der Ellipse hinter der Papierebene liegt, während im Falle der rechten gestrichelten Ellipse nur der rechte äußerste Rand noch in der Papierebene liegt, während der übrige Teil bereits nach vorn durch die Paperebene hindurch getreten ist. Die durchgezogene Ellipse entspricht einer Position des Fräserprofils bei welchem die linke Hälfte vor und die rechte Hälfte hinter der Papierebene liegt und die untere Hauptschneide 12 gerade den Grund des in der Papierebene liegenden Abschnitts der Kugelbahn schneidet. Durch Ändern des Winkels α, um welchen die Fräserachse gegenüber der Papierebene geneigt ist, die die zur Richtung der Kugelbahn senkrechte Ebene darstellt, kann man das Profil der Kugelbahn 4 beliebig variieren.

Der Neigungswinkel wird effektiv dadurch erzeugt, das die Fräserachse 7 senkrecht zur Achse 6 der Kugelnabe ausgerichtet wird, der Fräser parallel zu der Achse 6 verschoben wird und dabei gleichzeitig die Kugelnabe um ihre Achse gedreht wird, wobei die Umfangsgeschwindigkeit der Nabe zu der Vorschubgeschwindigkeit des Fräsers in Achsrichtung der Nabe dem Tangens des Winkels α entspricht. Um die entgegengesetzte Neigung benachbarter Kugelbahnen zu erzeugen, wird lediglich die Drehrichtung der Nabe während des Vorschubs des Fräsers in Axialrichtung für die Nabe geändert.

Der entscheidende Vorteil des erfindungsgemäßen Verfahrens und des entsprechend ausgestalteten Fräsers liegt darin, daß beim Herstellen derartiger Kugelbahnen von VL-Gelenken, die zur Achse der Kugelnabe geneigt verlaufen, sowohl die Kugelnabe als auch der Fräser in einer jeweils achsfesten Einspannung montiert werden können, wobei Relativbewegungen nur entlang der festen Achsen und um die festen Achsen erfolgen, so daß die Kugelbahnen von VL-Gelenken auf diese Weise sehr viel einfacher hergestellt werden können als mit Scheibenfräsern, deren Rotationsebene in Richtung der Kugelbahn und damit unter einem von Null Grad verschiedenen Winkel zur Nabenachse geneigt ist.

## Patentansprüche

1. Verfahren zum Fräsen von Kugelbahnen, welche ein In etwa elliptisches Profil haben, das eine erste Halbachse (a) hat, die sich in etwa senkrecht zum Grund (5) der Kugelbahn (4) erstreckt, und eine zweite Halbachse (b) hat, die sich senkrecht zur ersten Halbachse (a) und senkrecht zur Längsrichtung der Kugelbahn (4) erstreckt, wobei zur Herstellung der Kugelbahn (4) ein Scheibenfräser (11) verwendet wird, dessen Umfangsschneiden das elliptische Profil der Kugelbahn (4) erzeugen, wobei die Schneiden (12, 13) des Scheibenfräsers (11) in einem die Achse (7) des Fräsers (11) enthaltenden Schnitt ebenfalls ein elliptisches Profil haben, dessen erste Halbachse (a') senkrecht zur Fräserachse (7) verläuft und dessen zweite Halbachse (b') parallel zur Fräserachse (7) verläuft, **dadurch gekennzeichnet, dass** das Verhältnis (b'/a') der zweiten Halbachse b' zur ersten Halbachse a' der Schneiden (12, 13) größer ist als das Verhältnis (b/a) der zweiten Halbachse (b) zur ersten Halbachse (a) bei der herzustellenden Kugelbahn (4), wobei die Achse (7) des Scheibenfräsers (11) in der Projektion auf den mit den Schneiden (12, 13) des Fräsers (11) befindlichen Abschnitt der Kugelbahn (4) mit der zweiten Halbachse (b) des Kugelbahnprofils einen von 0° verschiedenen Anstellwinkel einschließt.

2. Verfahren nach Anspruch 1, **dadurch gekennzeichnet, dass** beide Halbachsen (a', b') des Kugelbahnfräsers (11) kleiner sind als jede der Halbachsen (a, b) des damit erzeugten Kugelbahnprofils.

3. Verfahren nach Anspruch 1 oder 2, **dadurch gekennzeichnet, dass** der Anstellwinkel zwischen 5° und 40°, vorzugsweise zwischen 10° und 30' eingestellt wird.

4. Verfahren nach einem der Ansprüche 1 bis 3, **dadurch gekennzeichnet, dass** das Halbachsenverhältnis (b'/a') der Fräserschneiden (12, 13) zwischen 10 % und 300 % größer ist als das Halbachsenverhältnis (b/a) des Kugelbahnprofils.

5. Verfahren nach einem der Ansprüche 1 bis 4, **dadurch gekennzeichnet, dass** der Radius (R) des Scheibenfräsers das 2- bis 12fache der großen Halbachse (b') des Profils der Fräserschneiden (12,13) beträgt.

6. Verfahren nach Anspruch 5, **dadurch gekennzeichnet, dass** der Radius (R) des Scheibenfräsers das 4 bis 8fache der großen Halbachse (b') des Profils der Fräserschneiden (12, 13) beträgt.

7. Verfahren nach einem der Ansprüche 1 bis 6, **dadurch gekennzeichnet, dass** das Kugelbahnprofil in der Nabe eines VL-Gelenkes hergestellt wird, In dem die Achse der VL-Nabe senkrecht zur Achse des Fräsers eingestellt und während des Fräservorschubs entlang der Achsrichtung der VL-Nabe gleichzeitig eine Drehung der VL-Nabe um ihre Achse erfolgt, wobei das Verhältnis von Umfangsgeschwindigkeit der VL-Nabe am Grund der Kugelbahn zu der Vorschubgeschwindigkeit des Fräsers dem Tangens des Anstellwinkel entspricht.

8. Kugelbahnfräser in Form eines Scheibenfräsers (11) mit am Scheibenumfang angeordneten Schneiden (12, 13), die ein in etwa elliptische Profil haben, **dadurch gekennzeichnet, dass** das Verhältnis der zur Fräserachse (7) parallelen Halbachse (b') des Profils der Schneiden (12, 13) zu der senkrecht zur Fräserachse (7) verlaufenden Halbachse (a') des Profils der Schneiden (12, 13) zwischen 1,06 und 3,5 beträgt.

9. Kugelbahnfräser nach Anspruch 8, **dadurch gekennzeichnet, dass** das Halbachsenverhältnis (b'/a') zwischen 1,1 und 2,5 liegt.

10. Kugelbahnfräser nach Anspruch 9, **dadurch gekennzeichnet, dass** das Halbachsenverhältnis (b'/a') zwischen 1,15 und 1,7 liegt.

11. Kugelbahnfräser nach einem der Ansprüche 8 bis 10, **dadurch gekennzeichnet, dass** der Radius (R) des Kugelbahnfräsers das 2- bis 12fache der zweiten Halbachse (b') des Profils der Fräserschneiden (12,13) beträgt.

12. Kugelbahnfräser nach Anspruch 11, **dadurch gekennzeichnet, dass** der Radius des Fräsers (11) das 4 bis 8fache der zweiten Halbachse (b') des Profils der Fräserschneiden (12, 13) beträgt.

## Claims

1. A method of milling ball races which are of an approximately elliptical profile which has a first semi-axis (a) extending substantially perpendicularly to the base (5) of the ball race (4) and a second semi-axis (b) extending perpendicularly to the first semi-axis (a) and perpendicularly to the longitudinal direction of the ball race (4), wherein a side milling cutter (11) is used to produce the ball race (4), the peripheral cutting edges of which produce the elliptical profile of the ball race (4), wherein the cutting edges (12, 13) of the side milling cutter (11) in a section containing the axis (7) of the milling cutter (11) are also of an elliptical profile whose first semi-axis (a') extends perpendicularly to the milling cutter axis (7) and whose second semi-axis (b') extends parallel to the milling cutter axis (7), **characterized in that** the ratio (b'/a') of the second semi-axis b' relative to the first semi-axis a' of the cutting edges (12, 13) is greater than the ratio (b/a) of the second semi-axis (b) relative to the first semi-axis (a) in the case of the ball race (4) to be produced, wherein the axis (7) of the side milling cutter (11) in projection on to the portion of the ball race (4), disposed with the cutting edges (12, 13) of the milling cutter (11), includes a setting angle different from 0° with the second semi-axis (b) of the ball race profile.

2. A method as set forth in claim 1 **characterized in that** both semi-axes (a', b') of the ball race milling cutter (11) are smaller than each of the semi-axes (a, b) of the ball race profile produced therewith.

3. A method as set forth in claim 1 or claim 2 **characterized in that** the setting angle is set at between 5° and 40°, preferably between 10° and 30°.

4. A method as set forth in one of claims 1 through 3 **characterized in that** the semi-axis ratio (b'/a') of the milling cutter cutting edges (12, 13) is between 10% and 300% greater than the semi-axis ratio (b/a) of the ball race profile.

5. A method as set forth in one of claims 1 through 4 **characterized in that** the radius (R) of the side milling cutter is between twice and 12 times the large semi-axis (b') of the profile of the milling cutter cutting edges (12, 13).

6. A method as set forth in claim 5 **characterized in that** the radius (R) of the side milling cutter is between 4 and 8 times the large semi-axis (b') of the profile of the milling cutter cutting edges (12, 13).

7. A method as set forth in one of claims 1 through 6 **characterized in that** the ball race profile in the hub of a VL joint is produced by the axis of the VL hub being set perpendicularly to the axis of the milling cutter and at the same time rotation of the VL hub about its axis being effected during the milling cutter advance along the axial direction of the VL hub, wherein the ratio of the peripheral speed of the VL hub at the base of the ball race to the advance speed of the milling cutter corresponds to the tangent of the setting angle.

8. A ball race milling cutter in the form of a side milling cutter (11) with cutting edges (12, 13) arranged at the disk periphery, which are of an approximately elliptical profile, **characterized in that** the ratio of the semi-axis (b'), parallel to the milling cutter axis (7), of the profile of the cutting edges (12, 13) relative to the semi-axis (a'), extending perpendicularly to the milling cutter axis (7), of the profile of the cutting edges (12, 13) is between 1.06 and 3.5.

9. A ball race milling cutter as set forth in claim 8 **characterized in that** the semi-axis ratio (b'/a') is between 1.1 and 2.5.

10. A ball race milling cutter as set forth in claim 9 **characterized in that** the semi-axis ratio (b'/a') is between 1.15 and 1.7.

11. A ball race milling cutter as set forth in one of claims 8 through 10 **characterized in that** the radius (R) of the ball race milling cutter is between twice and 12 times the second semi-axis (b') of the profile of the milling cutter cutting edges (12, 13).

12. A ball race milling cutter as set forth in claim 11 **characterized in that** the radius of the milling cutter (11) is between 4 and 8 times the second semi-axis (b') of the profile of the milling cutter cutting edges (12, 13).

## Revendications

1. Procédé de fraisage de pistes pour billes, les pistes ayant un profile approximativement elliptique avec un premier rayon (a) s'étendant approximativement perpendiculairement au fond (5) de la piste pour billes (4) et un second rayon (b) s'étendant perpendiculairement au premier rayon (a) et perpendiculairement à la direction longitudinale de la piste pour billes (4), pour la réalisation de la piste pour billes (4) étant utilisée une fraise à disque (11) dont les lames circonférentielles réalisent le profile elliptique de la piste pour billes (4), les lames (12, 13) de la fraise à disque (11) ayant, dans une section transversale comportant l'axe (7) de la fraise à disque (11), également un profile elliptique dont le premier rayon (a') s'étend perpendiculairement à l'axe (7) de la fraise à disque et dont le second rayon (b') s'étend parallèlement à l'axe (7) de la fraise à disque, **caractérisé en ce que** le rapport (b'/a') entre le second rayon b' et le premier rayon a' des lames (12, 13) est supérieur au rapport (b/a) entre le second rayon (b) et le premier rayon (a) de la piste pour billes (4) à réaliser, l'axe (7) de la fraise à disque (11) enfermant, en projection sur la section de la piste pour billes (4) avec laquelle les lames (12, 13) de la fraise à disque (11) sont en prise, avec le second rayon (b) du profile de la piste pour billes un angle d'attaque différent de 0°.

2. Procédé selon la revendication 1, **caractérisé en ce que** les deux rayons (a', b') de la fraise à disque (11) sont inférieurs à chacun des rayons (a, b) du profile de la piste pour billes réalisée avec celle-ci.

3. Procédé selon la revendication 1 ou 2, **caractérisé en ce que** l'angle d'attaque est ajusté entre 5° et 40°, de préférence entre 10° et 30°.

4. Procédé selon l'une des revendications 1 à 3, **caractérisé en ce que** le rapport entre les rayons (b'/a') des lames (12, 13) de la fraise est supérieur de 10% à 300% au rapport entre les rayons (b/a) du profile de la piste pour billes.

5. Procédé selon l'une des revendications 1 à 4, **caractérisé en ce que** le rayon (R) de la fraise à disque a une valeur de 2 à 12 fois le grand rayon (b') du profile des lames (12, 13) de la fraise à disque.

6. Procédé selon la revendication 5, **caractérisé en ce que** le rayon (R) de la fraise à disque a une valeur de 4 à 8 fois le grand rayon (b') du profile des lames (12, 13) de la fraise à disque.

7. Procédé selon l'une des revendications 1 à 6, **caractérisé en ce que** le profile de la piste pour billes est réalisé à proximité du moyeu d'un joint de transmission VL dans lequel l'axe du moyeu VL est ajusté perpendiculairement à l'axe de la fraise à disque et une rotation du moyeu VL autour de son axe est effectuée simultanément pendant l'avancement de la fraise à disque le long de la direction de l'axe du moyeu VL, le rapport entre la vitesse circonférentielle du moyeu VL au fond de la piste pour billes et la vitesse d'avancement de la fraise à disque correspondant à la tangente de l'angle d'attaque.

8. Fraise pour piste pour billes sous la forme d'une fraise à disque (11) avec des lames (12, 13) disposées au pourtour du disque qui ont un profile approximativement elliptique, **caractérisée en ce que** le rapport entre le rayon (b') du profile des lames (12, 13) parallèle à l'axe (7) de la fraise à disque et le rayon (a') du profile des lames (12, 13) perpendiculaire à l'axe (7) de la fraise à disque a une valeur entre 1,06 et 3,5.

9. Fraise à disque selon la revendication 8, **caractérisée en ce que** le rapport entre les rayons (b'/a') est compris entre 1,1 et 2,5.

10. Fraise à disque selon la revendication 9, **caractérisée en ce que** le rapport entre les rayons (b'/a') est compris entre 1,15 et 1,7.

11. Fraise à disque selon l'une des revendications 8 à 10, **caractérisée en ce que** le rayon (R) de la fraise à disque a une valeur de 2 à 12 fois le second rayon (b') du profile de lames (12, 13) de la fraise à disque.

12. Fraise à disque selon la revendication 11, **caractérisée en ce que** le rayon de la fraise à disque (11) a une valeur de 4 à 8 fois le second rayon (b') du profile des lames (12, 13) de la fraise à disque.
